# EUROPEAN PATENT APPLICATION

(11) **EP 2 540 630 A2**
(43) Date of publication of application: **02.01.2013**
(21) Application number: 12168650.5
(22) Date of filing: 21.05.2012
(51) Int. Cl.: B65B 67/04, G01N 21/95, B65B 57/16, B65B 57/18

(54) **Apparatus for inspecting defective medicines**

(30) Priority: 29.06.2011 KR 20110063814
(71) Applicant: JVM Co., Ltd., Daegu 704-946 (KR)
(72) Inventor: Kim, Jun-Ho, 706-014 Daegu (KR)
(74) Representative: von Kreisler Selting Werner

(57) **Abstract**

Disclosed is an apparatus for inspecting a defective medicine. The apparatus includes a body (10) provided therein with a working space (13) used to correct the defective medicine, a defective medicine winding roll (20) installed at one side of the body (10) and around which medicine pack containing the defective medicine is wound, a reinspector (40) installed at one side of the defective medicine winding roll (20) to reinspect medicine packs released from the defective medicine winding roll (20), a corrected medicine winding roll (30) installed at an opposite side of the body (10) to wind medicine packs, which have been inspected by the reinspector (40) or corrected in the working space (13), and a controller (50) to control operations of the defective medicine winding roll (20), the reinspector (40), and the corrected medicine winding roll (30).

## Description

### BACKGROUND OF THE INVENTION

### 1. Field of the Invention

The present invention relates to an apparatus for inspecting defective medicines. In more detail, the present invention relates to an apparatus for inspecting defective medicines, capable of reinspecting medicines classified as defective medicines and correcting the defective medicines through a manual work when dividing packaged medicines according to the patients.

### 2. Description of the Related Art

In general, a hospital or a pharmacy provides a medicine to a patient according to the prescription of a doctor.

In particular, since a chronic patient usually must take the same medicine every day for a long time, the patient simultaneously receives all prescription medicines to be taken for a long time. For example, as a hypertense or a diabetic patient takes the same medicine every day, the hypertense or the diabetic patient simultaneously receives a great amount of prescription medicines to be taken for one month from at least three months.

In this case, the dose of prescription medicines are put into a medicine pack having the shape of a pocket and provided at one side thereof with an opening, and the opening of the medicine pack is sealed to package the medicines. In this case, the medicines are packaged by linking a plurality of medicine packs with each other. In detail, in order to package the medicines, the dose of medicines is automatically packed and the medicine packs for the package of the medicines are consecutively linked with each other. Accordingly, the packaged medicines form the stack of plural medicine packs.

As the packaged medicines are consecutively linked with each other and a great amount of medicines form a stack, it is difficult to classify medicines packaged according to patients from the stack of medicine packs.

In addition, the classification of the packaged medicines is not only difficult, but also it is difficult to transfer the stack of consecutively-linked medicine packs to a related patient or it is difficult for the patient to bring or store the stack of the medicine packs after the packaged medicines have been classified.

Accordingly, a great amount of medicines consecutively packaged according to a prescription are wound, cut, and stickered according to patients to make a medicine package tied in the form of a winding roll. The medicine package tied in the form of the winding roll is subject to an inspection procedure to determine if the medicine package contains medicines of the related patient, prescription medicines are omitted, or medicines are normally packaged without a defective medicine.

If it is detected in the inspection process that a part of the prescription medicines is omitted or medicines different from the prescription medicines are packaged so that the medicines provided to the patient are not normal, but a defective medicine pack is provided to the patients, only a defective medicine pack must be separated and reinspected.

If the medicine pack is finally determined as a defective medicine pack, the work of correcting the defective medicine pack is required.

### SUMMARY OF THE INVENTION

Accordingly, the present invention has been made keeping in mind the above problems occurring in the prior art, and an object of the present invention is to provide an apparatus for inspecting defective medicines, capable of automatically inspecting the stack of medicine packs formed by winding medicine packs according to a prescription and inspecting and correcting a medicine pack, which is determined as a defective pack, through a manual work.

In addition, another object of the present invention is to provide an apparatus for inspecting defective medicines, capable of reinspecting a defect state of a medicine, which is determined as a defective medicine, through a manual work.

In addition, still another object of the present invention is to provide an apparatus for inspecting defective medicines, capable of stopping the operation thereof so that a worker can correct medicines finally determined as defective medicines.

Further, still another object of the present invention is to provide an apparatus for inspecting defective medicines, capable of recording corrected medicines and comparing the corrected medicines with normal medicines so that the corrected medicines can be finally determined as the normal medicines.

Further, still another object of the present invention is to provide an apparatus for inspecting defective medicines, capable of removing powder that may be generated in the process of correcting medicines.

Further, still another object of the present invention is to provide an apparatus for inspecting defective medicines, capable of reinspecting the shape of a medicine, which is determined as a defective medicine, through a manual work when the shape of the medicine does not have a typical shape.

Further, still another object of the present invention is to provide an apparatus for inspecting defective medicines, capable of stopping the operation thereof in an emergency situation.

In addition, still another object of the present invention is to provide an apparatus for inspecting defective medicines, capable of adjusting the position of the working table suitably for the height of a worker who manually inspects or corrects medicines.

Further, still another object of the present invention is to provide an apparatus for inspecting defective medicines, capable of guiding reinspected medicine packs or corrected medicine packs when rewinding the medicine packs or the corrected medicine packs.

In order to accomplish the above objects, according to another aspect of the present invention, there is provided an apparatus for inspecting a defective medicine. The apparatus includes a body provided therein with a working space used to correct the defective medicine, a defective medicine winding roll installed at one side of the body and around which medicine pack containing the defective medicine is wound, a reinspector installed at one side of the defective medicine winding roll to reinspect medicine packs released from the defective medicine winding roll, a corrected medicine winding roll installed at an opposite side of the body to wind medicine packs, which have been inspected by the reinspector or corrected in the working space, and a controller to control operations of the defective medicine winding roll, the reinspector, and the corrected medicine winding roll.

The reinspector includes an inlet roller to sequentially receive the medicine packs released from the defective medicine winding roll, a defect mark sensor to sense a defect mark marked on a medicine pack introduced into the inlet roller and to transfer an information of the sensing of the defect mark to the controller if the defect mark is sensed, a photographing device to photograph the medicine pack having the defect mark if the defect mark on the medicine pack is recognized by the defect mark sensor and to transfer an information of the photographing of the medicine pack to the controller, an outlet roller to withdraw the medicine pack, which has passed through the photographing device, and to transfer the medicine pack so that the medicine pack is wound around the corrected medicine winding roll, and a cover part to cover an upper portion of the reinspector.

The controller stops the operations of the defective medicine winding roll, the reinspector, and the corrected medicine winding roll if the defect mark on the medicine pack is recognized by the defect mark sensor and opens the cover part.

The photographing device photographs a corrected medicine pack after the medicine pack having the defect mark has been checked and replaced with the corrected medicine pack through a manual work if the operations of the defective medicine winding roll, the reinspector, and the corrected medicine winding roll have been stopped and the cover part has been open.

The working space of the body is provided on a top surface thereof with a mesh member and provided at a lower portion thereof with a suction device.

The apparatus further includes a manual defect mark sensor provided at one side of the body to allow a worker to manually inspect a defect mark of a medicine.

The apparatus further includes an emergency button provided in the body to stop operations the defective medicine winding roll, the reinspector, and the corrected medicine winding roll when the medicine pack, which passes through the defective medicine winding roll, the reinspector, and the corrected medicine winding roll, is damaged.

The apparatus further includes a height adjusting part provided in the body to adjust a height of the body suitably for a height of a worker.

The height adjusting part includes vertical rotating members vertically installed at one side and an opposite side of a lower portion of the body and moving up the body or moving down the body while rotating, a horizontal rotating member horizontally installed between the vertical rotating members to move up the vertical rotating members or move down the vertical rotating members while rotating, direction changing gears installed at each vertical rotating member and the horizontal rotating member, respectively, to transfer a driving force of the horizontal rotating member to the vertical rotating member, and a height adjustment driving part to drive the horizontal rotating member.

The apparatus further includes a winding guide roller part installed at one side of the corrected medicine winding roll to guide the winding of the corrected medicine packs around the corrected medicine winding roll.

The winding guide roller part includes a fixed guide roller fixed to one lower portion of the corrected medicine winding roll, and a rotatable guide roller positioned on the fixed guide roller to make contact with wound medicines and comprising a guide rotation shaft so that the rotatable guide roller is upwardly rotatable.

The rotatable guide roller rotatably moves upward and is provide with a guide roller fixing part, which is rotated upward and fixed when the corrected medicine winding roll is installed.

The guide roller fixing part includes a first magnet installed at one side of the guide rotation shaft of the rotatable guide roller, and a second magnet connected to the first magnet due to an attractive force when the rotatable guide roller is rotated so that the rotatable guide roller is moved up.

As described above, according to the present invention, a medicine determined as a defective medicine is reinspected, a medicine finally determined as a defective medicine is corrected through a manual work, and the corrected medicine is supplied to a related patient, thereby preventing a defective medicine from being transferred to the patient.

In addition, according to the present invention, when a medicine determined as a defective medicine is reinspected, the medicine determined as the defective medicine is photographed and compared with a normal medicine. In this case, a worker manually reinspects the medicine through several reinspection processes. Accordingly, the defect state of the medicine is reliably determined, so that the defect rate of the medicine can be minimized.

According to the present invention, after the medicine has been corrected, the corrected medicine is photographed and compared with a normal medicine. Accordingly, the corrected medicine can be supplied to a patient after the corrected medicine has been determined as the normal medicine.

Further, according to the present invention, the mesh member and the suction device are installed in the working space used to correct a medicine so that powder can be sucked. Accordingly, the working space can be cleanly maintained.

In addition, according to the present invention, when the medicine does not have a predetermined shape, a worker can manually inspect the defect mark. Accordingly, medicines having various shapes can be reinspected.

In addition, according to the present invention, since the operation of the apparatus for inspecting a defective medicine can be controlled in the emergency situation, the medicine can be prevented from being damaged in the emergency situation.

Further, according to the present invention, since the height of the working space can be adjusted suitably for the height of a worker who manually inspects a medicine, the fatigue of the worker who inspects the medicine can be reduced.

In addition, according to the present invention, as the winding guide roller part to guide the winding of medicines that have been subject to an inspection work is installed, reinspected medicines can be maintained in the winding form similarly to the form of the medicines before a reinspection work is performed, so that the reinspected medicines can be easily transferred to the patient.

Further, according to the present invention, the rotatable guide roller of the winding guide roller part is rotated movably up or down and the guide roller fixing part is provided to maintain the lifted state of the rotatable guide roller. Accordingly, when the corrected medicine winding roll is installed or detached, the rotatable guide roller does not interfere with the corrected medicine winding roll, and the corrected medicine can be wound around the corrected medicine winding roll.

### BRIEF DESCRIPTION OF THE DRAWINGS

FIG. 1 is a view showing an apparatus for inspecting defective medicines according to the present invention;
FIGS. 2a and 2b are rear views showing the apparatus for inspecting the defective medicines according to the present invention;
FIGS. 3a and 3b are views showing a reinspector in the apparatus for inspecting the defective medicines according to the present invention;
FIGS. 4a and 4b are views showing a height adjustment driving part in the apparatus for inspecting the defective medicines according to the present invention; and
FIG. 5 is a flowchart showing the operating procedure of the apparatus for inspecting the defective medicines according to the present invention.

### DETAILED DESCRIPTION OF THE INVENTION

Hereinafter, exemplary embodiments of the present invention will be described in more detail with reference to accompanying drawings.

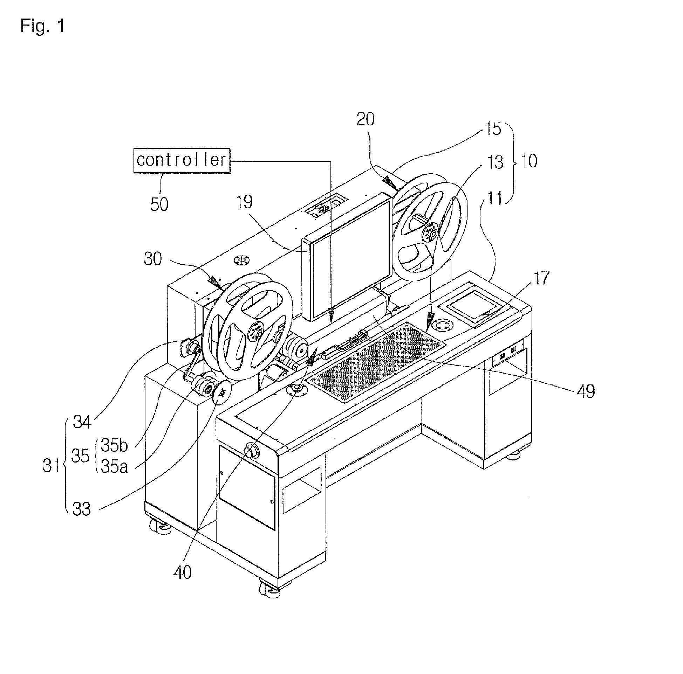

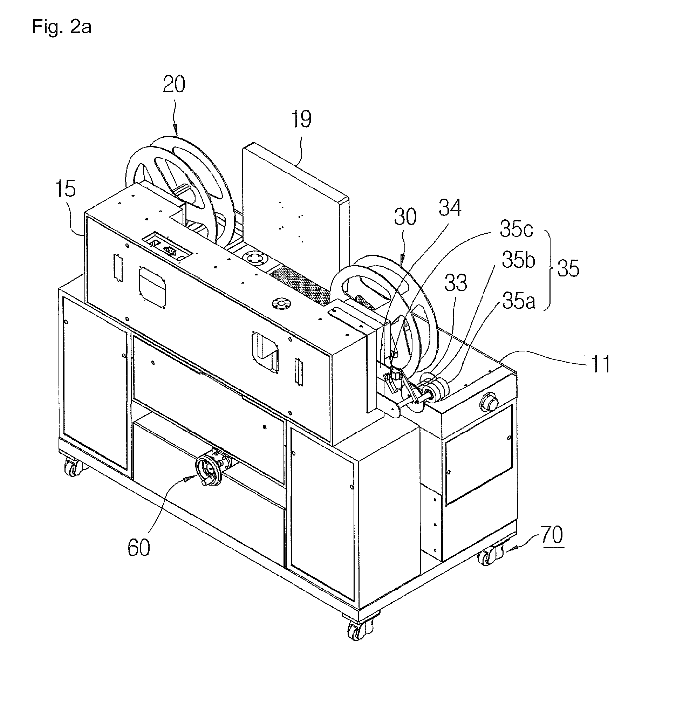

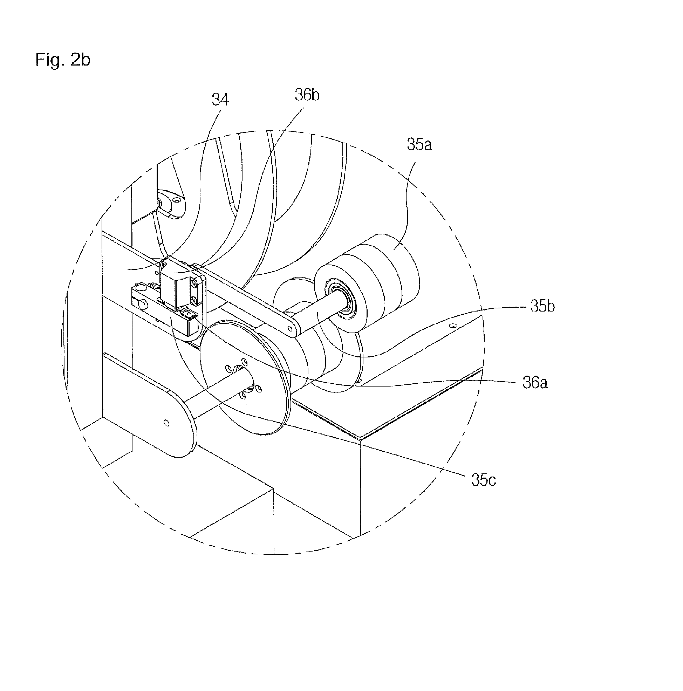

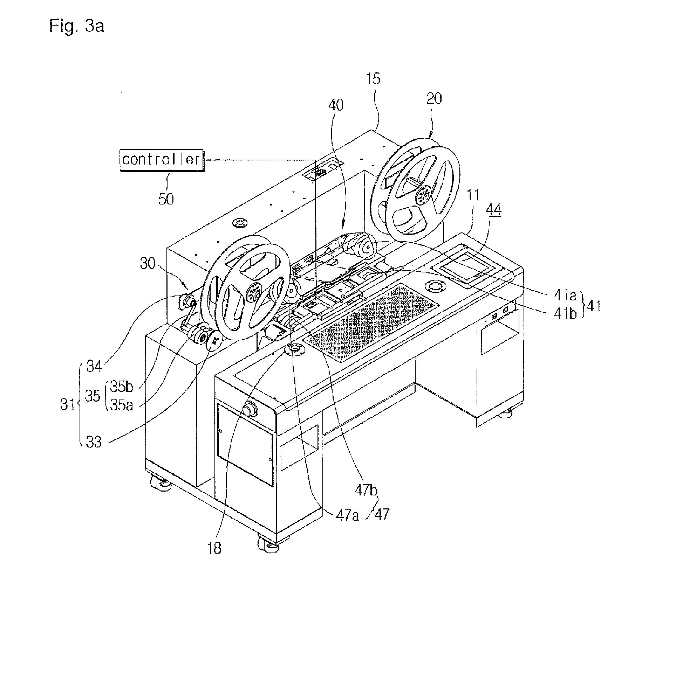

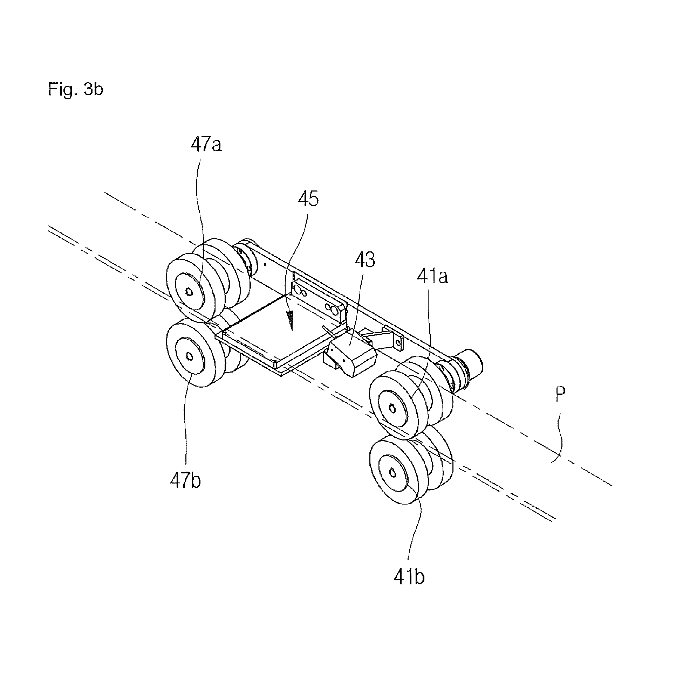

FIG. 1 is a view showing an apparatus for inspecting defective medicines according to the present invention, FIGS. 2a and 2b are rear views showing the apparatus for inspecting the defective medicines according to the present invention, and FIGS. 3a and 3b are views showing a reinspector in the apparatus for inspecting the defective medicines according to the present invention.

As shown in accompanying drawings, the apparatus for inspecting the defective medicines according to the present invention reinspects medicines determined as defective medicines when packaging medicine packs having medicines according to patients. The apparatus for inspecting the defective medicines includes a body 10, a defective medicine winding roll 20 installed at one side of the body 10, a corrected medicine winding roll 30 installed at an opposite side of the body 10, a reinspector 40 interposed between the defective medicine winding roll 20 and the corrected medicine winding roll 30 to reinspect the medicines, and a controller 50.

The body 10 includes a working table 11 provided in an upper portion thereof with a working space 13 where a defective medicine is inspected and corrected, and an installation table 15 installed perpendicularly to the working table 11 so that the defective medicine winding roll 20, which is described later, the corrected medicine winding roll 30, and the reinspector 40 are installed on the installation table 15.

In the working space 13, a worker manually determines the defect state of a medicine, and corrects the defective medicine. In other words, the working space 13 allows a worker to perform a correction work of opening the pack of the defective medicine, removing an erroneously packaged medicine from the pack, or adding omitted medicines into the pack. The working space 13 includes a downwardly-recessed space (not shown) formed in the working table 11 and a mesh member 17 to cover the top surface of the space. In this case, a suction device is installed in the downwardly-recessed space to suck foreign matters, such as medicine powder, existing in the working space 13 through a plurality of through holes formed in the mesh member 17.

Meanwhile, the installation table 15 is installed perpendicularly to the working table 11 so that the defective medicine winding roll 20, which is described later, and the corrected medicine winding roll 30 are detachably installed on the installing able 15. In addition, a screen 19 is installed on the installation table 15 so that the controller 50 is manipulated to control the apparatus for inspecting the defective medicines or the operating state of the apparatus for inspecting the defective medicines can be determined.

The stack of medicine packs determined as defective medicine packs when the medicine packs are packaged according to the prescription and consecutively linked with each other are wound around a bobbin of the defective medicine winding roll 20.

The stack of the medicine packs wound around the defective medicine winding roll 20 is released from the defective medicine winding roll 20 and subject to the reinspecting process in the reinspector 40, which will be described later, and then re-wound around the corrected medicine winding roll 30.

A winding guide roller part 31 is installed at one side of the corrected medicine winding roll 30 to guide the winding of medicine packs around the corrected medicine winding roll 30. Referring to FIG. 2a, the winding guide roller part 31 includes a fixed guide roller 33, which is fixed to one lower portion of the corrected medicine winding roll 30, and a rotatable guide roller 35, which is positioned on the fixed guide roller 33 to make contact with the wound medicines and upwardly rotates.

The fixed guide roller 33 guides drug medicines inspected by the reinspector 40, which is described later, into the corrected medicine winding roll 30 in the state that the position of the fixed guide roller 33 is fixed.

The rotatable guide roller 35 is rotatably installed in an install bracket 34 protruding from one side of the installation table 15. In more detail, the rotatable guide roller 35 includes a guide roller 35a and a rotation member 35b rotatably installed in the guide roller 35a, and rotatable by a guide rotation shaft 35c installed in the rotation member 35b.

Therefore, since the rotatable guide roller 35 is rotatable, if the winding thickness of the medicine packs is gradually increased as the medicine packs are wound around the corrected medicine winding roll 30, the rotatable guide roller 35 guides the medicine packs being wound while rotatably moving up and down according to the thickness of the medicine packs.

In addition, when the corrected medicine winding roll 30 is installed in the installation table 15 or released from the installation table 15, the rotatable guide roller 35 is upwardly rotated and fixed by installing a guide roller fixing part at one side of the installation table 15, so that the rotatable guide roller 35 does not interfere with the corrected medicine winding roll 30 preferably.

As shown in FIGS. 2a and 2b, the guide roller fixing part includes a first magnet 36a provided in the guide rotation shaft 35c of the rotatable guide roller 35 and a second magnet 36b installed at the install bracket 34 and having a polarity different from that of the first magnet 36a so that the first magnet 36a is connected to the second magnet 36b at a position where the rotatable guide roller 35 lifted and rotated is fixed.

Accordingly, when the corrected medicine winding roll 30 is installed at the installation table 15 or released from the installation table 15, the rotatable guide roller 35 is upwardly rotated to connect the first magnet 36a to the second magnet 36b due to attractive force so that the rotatable guide roller 35 does not interfere with the corrected medicine winding roll 30. When corrected medicine packs are wound around the corrected medicine winding roll 30, a worker separates the first magnet 36a from the second magnet 36b to downwardly rotate the rotatable guide roller 35 so that the rotatable guide roller 35 is adjacent to the corrected medicine winding roll 30, thereby guiding the corrected medicine packs so that the corrected medicine packs are wound around the corrected medicine winding roll 30.

Referring to FIG. 3a, the reinspector 40 is interposed between the defective medicine winding roll 20 and the corrected medicine winding roll 30 to reinspect medicines released from the defective medicine winding roll 20 while passing the medicines and allow a worker to manually correct medicines determined as defective medicines in the reinspection process. The reinspector 40 includes an inlet roller 41 used to receive the medicines, a photographing device 45 used to inspect the medicines, an outlet roller 47 used to withdraw the inspected medicines, and a cover part 49 to cover the inlet roller 41, the outlet roller 47, and the photographing device 45.

The inlet roller 41 is adjacent to the defective medicine winding roll 20, and the outlet roller 47 is adjacent to the corrected medicine winding roll 30. Accordingly, the medicines are released from the defective medicine winding roll 20 and introduced into the reinspector 40, and inspected medicines are rewound around the corrected medicine winding roll 30.

In this case, the inlet roller 41 and the outlet roller 47 include upper and lower rollers to make contact with upper and lower portions of a medicine while transferring the medicine.

In detail, the inlet roller 41 includes an upper inlet roller 41a making contact with an upper portion of a medicine and a lower inlet roller 41b making contact with a lower portion of the medicine. The outlet roller 47 includes an upper outlet roller 47a and a lower outlet roller 47b.

In this case, the lower inlet roller 41b and the lower outlet roller 47b are placed at a location between the working table 11 and the installation table 15, and the upper inlet roller 41a and the upper outlet roller 47a are installed inside the cover part 49.

One side of the cover part 47 is fixed by using a hinge, and an opposite side of the cover part 47 is moved up or moved down to open or close the reinspector 40. If the cover part 47 is open, the upper inlet roller 41a and the upper outlet roller 47a are moved up together with the cover part 47, so that medicine packs seated between the lower inlet roller 41b and the lower outlet roller 47b are exposed.

A manual defect mark sensor 44 may be additionally installed at one side of the working table 11 to allow a worker to manually check defect marks of medicines when the medicines cannot be wound around or released from the defective medicine winding roll 20 or the corrected medicine winding roll 30, or when the medicines are irregularly provided.

In addition, an emergency button 18 is additionally installed at the working table 11 to stop the whole operation of the apparatus for inspecting defective medicines when medicines are tangled or damaged inside the reinspector 40 in the process of transferring the medicines.

As shown in FIG. 3b, a defect mark sensor 43 is installed at one side of the inlet roller 41 to sense the defect mark provided on a medicine pack P when medicines are packaged, and the packaged medicines are checked.

The photographing device 45 photographs a medicine having a defect mark sensed by the defect mark sensor 43 after correcting the medicine and transfers the image of the medicine to the controller 50.

The controller 50 finally determines if the medicine is defective by comparing the medicine image transferred from the photographing device 45 with a reference image.

In this case, if the medicine having a defect mark is sensed, the controller 50 stops the operation of the apparatus for inspecting defective medicines, and a worker opens the cover part 49 to manually inspect the medicine determined as a defective medicine.

As described above, the worker manually inspects medicines even though the medicines are determined as defective medicines based on the image of the medicines photographed by the photographing device 45. This is because one medicine is covered with another medicine in the process of transferring medicines packaged in a medicine pack, so all medicines are not photographed, so that the medicine pack may be determined as a defective medicine pack although the medicine pack is not defective.

Therefore, it is necessary to manually inspect the medicines photographed by the photographing device 45 to determine if the medicines are actually defective.

In addition, if the medicines, which have been manually inspected by the worker, are defective, that is, if the number of the medicines is insufficient, or a medicine, which is not a prescription medicine, is packaged in a pack, the worker transfers a medicine pack into the working space 13, opens one side of the medicine pack, puts medicines into the medicine pack according to a prescription, seals the medicine pack, and reintroduces the medicine pack into the reinspector 40.

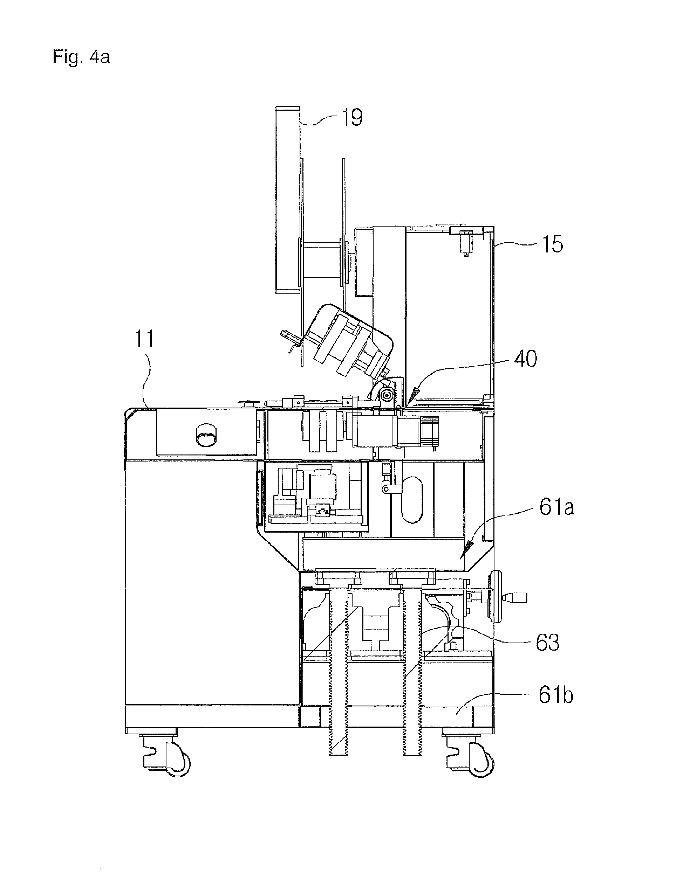

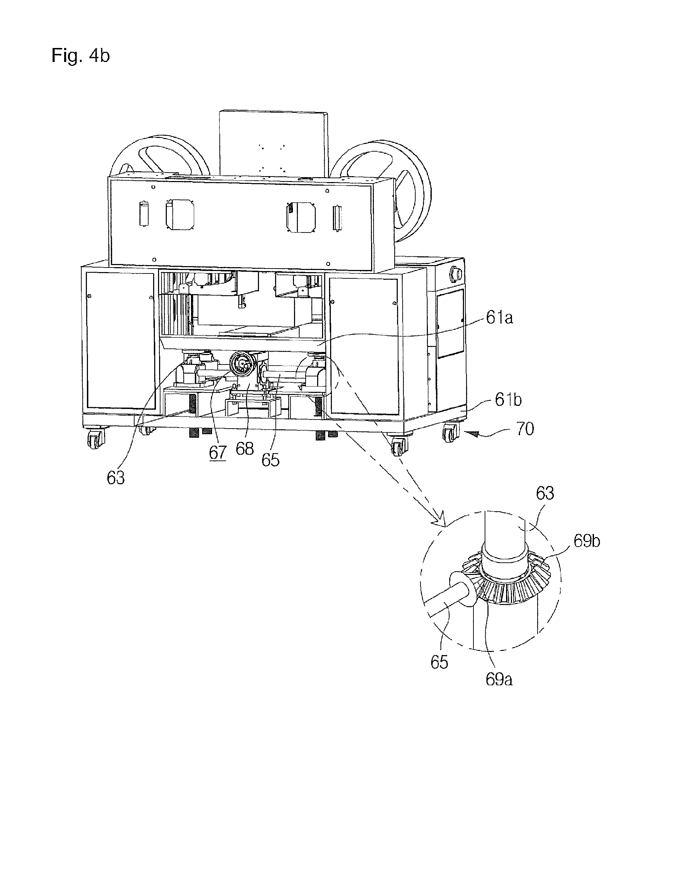

FIGS. 4a and 4b are views showing a height adjusting part 60 for the working table 11 in the apparatus for inspecting defective medicines according to the present invention.

As shown in FIGS. 4a and 4b, the height adjusting part 60 is installed at the working table 11 so that the height of the working table 111 is adjusted suitably for a worker when the worker carries out the above works on the working table 11.

The height adjusting part 60 moves up or moves down the body 10 including the working table 11 having the working space 13, the installation table 15, and the reinspector 40 interposed between the working table 11 and the installation table 15. The height adjusting part 60 includes an upper plate 61a having the above components mounted thereon, a lower plate 61b provided below the upper plate 61a while being spaced apart from the upper plate 61a, vertical rotating members 63 installed at both sides between the upper and lower plates 61a and 61b, a horizontal rotating member 65 connecting both side-vertical rotating members 63 to each other, first and second helical gears 69a and 69b interposed between the vertical rotating member 63 and the horizontal rotating member 65 to serve as direction changing gears, and a height adjustment driving module 67 to drive the above components.

Each vertical rotating member 63 is provided at the outer surface thereof with a thread, and has an upper portion making contact with a bottom surface of the upper plate 61a and a lower portion passing through the lower plate 61b. In this case, a thread is formed in the lower plate 61b so that the thread is engaged with the thread formed around the vertical rotating member 63. Accordingly, the upper plate 61a is moved up or moved down along a rotational direction of the vertical rotating member 63.

As shown in FIG. 4b, the horizontal rotating member 65 is interposed between the vertical rotating members 63 installed at both sides, and driven and rotated by the height adjustment driving part 67 which is described later.

In this case, the horizontal rotating member 65 is driven and rotated by the height adjustment driving part 67 which is described later. In addition, the direction changing gears are interposed between the horizontal rotating member 65 and the vertical rotating member 63 to rotate the vertical rotating member 63 by changing the direction of the rotational force of the horizontal rotating member 65.

The direction changing gears include the first helical gears 69a, which are installed at both end portions of the horizontal rotating member 65, and the second helical bears 69, which are installed at the vertical rotating members 63 making contact with the horizontal rotating member 65 while being engaged with the first helical gears 69a, so that the driving force of the horizontal rotating member 65 is transferred to the vertical rotating member 63.

In addition, the height adjustment driving part 67 to drive the horizontal rotating member 65 is installed at one side of the horizontal rotating member 65 and provided with a gear box 68 including direction changing gears such as the first and second helical gears so that the driving force of the height adjustment driving part 67 can be transferred to the horizontal rotating member 65.

In this case, the height adjustment driving part 67 may be manually driven by a worker or driven by a motor.

Meanwhile, preferably, a moving part 70 is installed at the lower portion of the body 10 so that the moving part 70 can freely move to a place requiring the apparatus for inspecting defective medicines.

In detail, the moving part 70 may include a typical wheel. The moving part 70 can be manually or automatically moved to a desirable plate by a worker or an additional driving part.

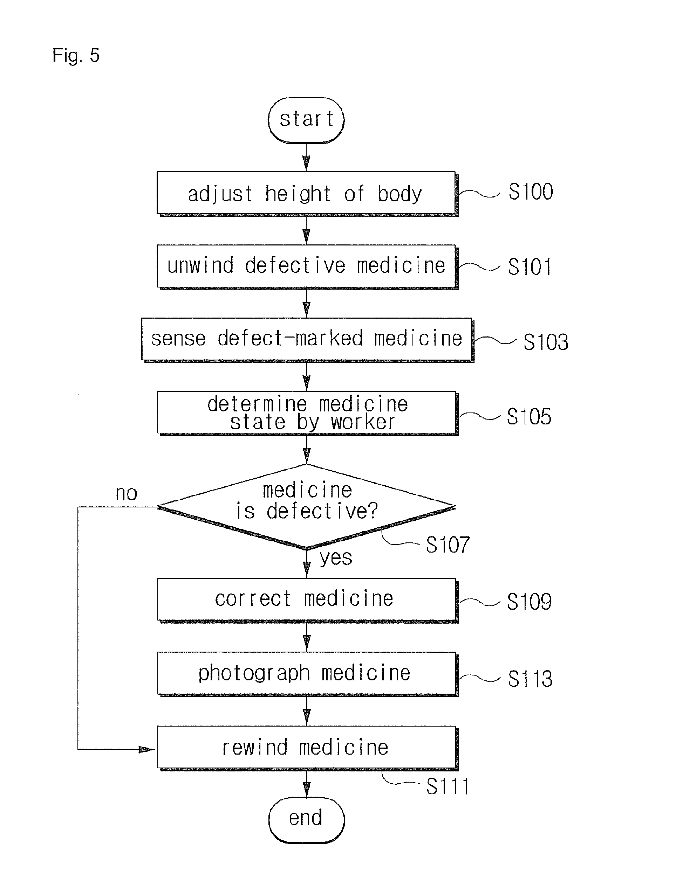

FIG. 5 is a flowchart showing the operating procedure of the apparatus for inspecting defective medicines according to the present invention.

Hereinafter, the operating procedure of the apparatus for inspecting defective medicines according to the present invention will be described in detail with reference to accompanying drawings.

First, a worker working in the apparatus for inspecting defective medicines adjusts the position of the upper plate 61a by driving the height adjustment driving part 67 according to the body condition of the worker (step S100).

Next, in the step of packaging medicines, the defective medicine winding roll 20 having a medicine pack determined as a defective medicine pack is provided, and the medicine pack determined as the defective medicine pack is released from the defective medicine winding roll 20 so that the medicine pack is introduced into the reinspector 40 (step S101).

Then, the controller 50 operates the apparatus for inspecting the defective medicines, so that defect-marked medicines introduced into the inlet roller 41 are sensed by the defect mark sensor 43 (step S103).

Subsequently, the controller 50 stops the operation of the apparatus for inspecting the defective medicines to open the cover part 49. The worker opens the cover part 49 and brings the defect-marked medicines into the working space 13 to manually determine the state of the medicines (step S105).

The worker determines the defect state of the medicines by naked eyes (step S107).

If the medicines are defective, the worker opens one side of a medicine pack containing the defective medicines, extracts the erroneously-packaged medicines from the medicine pack, puts corrected medicines into the medicine pack, and repackages the medicines according to the prescription (step S109).

If medicines are repackaged or medicines manually checked by the worker are not defective, the worker introduces the medicines into the reinspector 40 and puts the medicines into the photographing device 45 to photograph the medicines.

The image information of the photographed medicines is transferred to the controller 50 and compared with a reference image to determine that the medicines are not defective finally (step S113).

The medicines, which are corrected or repackaged, are rewound around the corrected medicine winding roll 30 so that the medicines are transferred to a patient (step S111).

Therefore, according to the present invention, medicines packaged according to a prescription can be exactly transferred to a patient by finally determining the defect state of medicines which have been determined as defective medicines and correcting the defective medicines.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An apparatus for inspecting a defective medicine, the apparatus comprising:
a body provided therein with a working space used to correct the defective medicine;
a defective medicine winding roll installed at one side of the body and around which medicine pack containing the defective medicine is wound;
a reinspector installed at one side of the defective medicine winding roll to reinspect medicine packs released from the defective medicine winding roll;
a corrected medicine winding roll installed at an opposite side of the body to wind medicine packs, which have been inspected by the reinspector or corrected in the working space; and
a controller to control operations of the defective medicine winding roll, the reinspector, and the corrected medicine winding roll.

2. The apparatus of claim 1, wherein the reinspector comprises:
an inlet roller to sequentially receive the medicine packs released from the defective medicine winding roll;
a defect mark sensor to sense a defect mark marked on a medicine pack introduced into the inlet roller and to transfer an information of the sensing of the defect mark to the controller if the defect mark is sensed;
a photographing device to photograph the medicine pack having the defect mark if the defect mark on the medicine pack is recognized by the defect mark sensor and to transfer an information of the photographing of the medicine pack to the controller;
an outlet roller to withdraw the medicine pack, which has passed through the photographing device, and to transfer the medicine pack so that the medicine pack is wound around the corrected medicine winding roll; and
a cover part to cover an upper portion of the reinspector.

3. The apparatus of claim 2, wherein the controller stops the operations of the defective medicine winding roll, the reinspector, and the corrected medicine winding roll if the defect mark on the medicine pack is recognized by the defect mark sensor and opens the cover part.

4. The apparatus of claim 3, wherein the photographing device photographs a corrected medicine pack after the medicine pack having the defect mark has been checked and replaced with the corrected medicine pack through a manual work if the operations of the defective medicine winding roll, the reinspector, and the corrected medicine winding roll have been stopped and the cover part has been open.

5. The apparatus of claim 1, wherein the working space of the body is provided on a top surface thereof with a mesh member and provided at a lower portion thereof with a suction device.

6. The apparatus of claim 1, further comprising a manual defect mark sensor provided at one side of the body to allow a worker to manually inspect a defect mark of a medicine.

7. The apparatus of claim 1, further comprising an emergency button provided in the body to stop operations the defective medicine winding roll, the reinspector, and the corrected medicine winding roll when the medicine pack, which passes through the defective medicine winding roll, the reinspector, and the corrected medicine winding roll, is damaged.

8. The apparatus of claim 1, further comparing a height adjusting part provided in the body to adjust a height of the body suitably for a height of a worker.

9. The apparatus of claim 8, wherein the height adjusting part comprises:
vertical rotating members vertically installed at one side and an opposite side of a lower portion of the body and moving up the body or moving down the body while rotating;
a horizontal rotating member horizontally installed between the vertical rotating members to move up the vertical rotating members or move down the vertical rotating members while rotating;
direction changing gears installed at each vertical rotating member and the horizontal rotating member, respectively, to transfer a driving force of the horizontal rotating member to the vertical rotating member; and
a height adjustment driving part to drive the horizontal rotating member.

10. The apparatus of claim 1, further comprising a winding guide roller part installed at one side of the corrected medicine winding roll to guide the winding of the corrected medicine packs around the corrected medicine winding roll.

11. The apparatus of claim 10, wherein the winding guide roller part comprises:
a fixed guide roller fixed to one lower portion of the corrected medicine winding roll; and
a rotatable guide roller positioned on the fixed guide roller to make contact with wound medicines and comprising a guide rotation shaft so that the rotatable guide roller is upwardly rotatable.

12. The apparatus of claim 11, wherein the rotatable guide roller rotatably moves upward and is provide with a guide roller fixing part, which is rotated upward and fixed when the corrected medicine winding roll is installed.

13. The apparatus of claim 12, wherein the guide roller fixing part comprises:
a first magnet installed at one side of the guide rotation shaft of the rotatable guide roller; and
a second magnet connected to the first magnet due to an attractive force when the rotatable guide roller is rotated so that the rotatable guide roller is moved up.
